(19) Europäisches Patentamt / European Patent Office / Office européen des brevets

(11) **EP 4 660 134 A1**

(12) **EUROPEAN PATENT APPLICATION**
published in accordance with Art. 153(4) EPC

(43) Date of publication:
**10.12.2025 Bulletin 2025/50**

(21) Application number: **24753454.8**

(22) Date of filing: **09.02.2024**

(51) International Patent Classification (IPC):
**C01B 33/16** $^{(2006.01)}$

(52) Cooperative Patent Classification (CPC):
**C01B 33/16**

(86) International application number:
**PCT/JP2024/004650**

(87) International publication number:
**WO 2024/167011 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023 JP 2023019451**

(71) Applicant: **Tiem Factory Inc.
Ibaraki 311-3108 (JP)**

(72) Inventors:
• **KANAMORI, Kazuyoshi
Kyoto-shi, Kyoto 606-8501 (JP)**
• **UEOKA, Ryota
Kyoto-shi, Kyoto 606-8501 (JP)**
• **NAKANISHI, Kazuki
Kyoto-shi, Kyoto 606-8501 (JP)**
• **YAMAJI, Masahiro
Higashiibaraki-gun, Ibaraki 311-3108 (JP)**

(74) Representative: **Maiwald GmbH
Elisenhof
Elisenstraße 3
80335 München (DE)**

(54) **AEROGEL**

(57) The present invention provides an aerogel which exhibits excellent breaking resistance regardless of its thickness when deflection occurs, and which has high light transmitting properties (especially, high visible light transmitting properties). An aerogel 1 according to the present invention contains Si, and is formed of a fibrous skeleton 3 which is continuous in the form of a network, and a plurality of pores 2 which are defined by the skeleton 3. The skeleton 3 has generally polygonal outline parts 31 which respectively form the outlines of the plurality of pores 2. The outline parts 31 each have a plurality of branch parts 32, which are portions corresponding to the sides of the generally polygonal shape, and a plurality of knot parts 33, which are portions corresponding to the vertices of the generally polygonal shape. The average arrangement pitch between adjacent knot parts 33 among the knot parts 33 constituting the pores 2 is not less than 1.50 times the average diameter $R2$ of inscribed circles that are drawn inside the portions corresponding to knot parts 33. The transmittance ($\tau_{550}$) of this aerogel at a wavelength of 550 nm is 60% or more per 10 mm thickness.

FIG. 1

**Description**

TECHNICAL FIELD

The present invention relates to an aerogel, and more particularly, to a Si-containing aerogel.

BACKGROUND ART

The aerogel is a material having a uniform mesoporous structure, a high porosity (typically 90% or more), a low bulk density (0.004 g/cm$^3$ to 0.500 g/cm$^3$), and an extremely low thermal conductivity (20 mW/m K or less), and is typically produced by a sol-gel method. Among them, a silica aerogel has high visible light transparency in addition to high thermal insulating characteristics obtained by low thermal conductivity, and is expected to be applied as a transparent thermal insulating material applicable to housing windows (typically, visible light transmittance of about 60% in multilayer windows with high thermal insulation properties), displays, and the like.

On the other hand, since a silica aerogel is a very brittle material due to its high porosity and its low-density structure caused by a microstructure composed of nanometer-scale domains (typically 100 nm or less), it is known that, when used as a monolith of a certain size (volume), the silica aerogel is likely to fracture when deflection occurs, and there is a problem in handleability. Further, the silica aerogel is easily fractured when deflection occurs, and thus is a material which is very difficult to bend. In a silica aerogel having a particularly large size, there is also a problem that it cannot withstand deflection deformation due to its own weight and thus is fractured.

In response to this problem, for example, Non-Patent Document 1 reports that the bending deformability of the aerogel is improved by modifying and reinforcing a surface of a skeleton of the silica aerogel with an organic component. In addition, Patent Document 1 and Non-Patent Document 2 disclose that a low-density gel body having a skeleton containing a polysiloxane chain and an organic polymerization chain allows the aerogel, which is formed thin, to bend well by introducing the organic polymerization chain into the skeleton.

Citation List

Non-Patent Document

Non-Patent Document 1: N. Leventis, C. S.-Leventis, G. Zhang, A.-M. M. Rawashdeh, Nano Lett. 2002, 2, 957-960. Non-Patent Document 2: G. Zu, K. Kanamori, T. Shimizu, Y. Zhu, A. Maeno, H. Kaji, K. Nakanishi, J. Shen, Chem. Mater. 2018, 30, 2759-2770.

Patent Document

Patent Document 1: PCT International Publication No. WO2019/039541

DISCLOSURE OF THE INVENTION

Problems to be Solved by the Invention

However, conventional approaches to solve this problem, while improving the bending deformability of the silica aerogel, significantly compromised the visible light transparency of the silica aerogel. In addition, the approaches in Patent Document 1 and Non-Patent Document 2 did not study whether the aerogel, when molded with an increased thickness, could similarly undergo considerable bending. Therefore, it is unknown from the descriptions of Patent Document 1 and Non-Patent Document 2 whether the aerogel obtained by the approaches of Patent Document 1 and Non-Patent Document 2 could be considerably bent when the thickness is increased to 5 mm or more, for example.

In this regard, the present inventors produced an aerogel having a thickness of 8 mm to 10 mm based on those described in Patent Document 1 and Non-Patent Document 2, but the obtained aerogel was easily fractured when deflection occurred, and had no bending deformability.

In addition, in conventional approaches to this problem, there are many cases where the density of the skeleton of the silica aerogel is increased and accordingly, the thermal insulating characteristics are impaired, rather than enhancing the fracture resistance when deflection occurs in the silica aerogel.

The present invention has been made in view of such circumstances, and an object thereof is to provide an aerogel having excellent fracture resistance when deflection occurs and having high transparency (particularly high visible light transparency) regardless of its thickness.

Another object of the present invention is to provide an aerogel having high fracture resistance and high thermal insulating characteristics when deflection occurs.

Means for Solving the Problems

In order to implement the above objects, the features of the present invention are as indicated below.
(1) An aerogel formed by a fibrous skeleton continuous in a mesh form and a plurality of pores defined by the skeleton, the aerogel containing: Si, the skeleton having substantially polygonal outline parts which respectively form outlines of the plurality of pores, the outline parts each having a plurality of branch parts, which are parts corresponding to sides of the substantially polygonal shape, and a plurality of nodes, which are parts corresponding to vertices of the substantially polygonal shape, an average arrangement pitch between adjacent nodes among the nodes constituting the pores being 1.50 times or more an average diameter of inscribed circles drawn at the nodes, a transmittance ($\tau_{550}$) at a wavelength of 550 nm being 60% or more at a thickness of 10 mm.
(2) An aerogel containing: Si, a transmittance ($\tau_{550}$) at a wavelength of 550 nm being 60% or more at a thickness of 10 mm, an average thickness being 5 mm or more, a maximum bending strain ($\varepsilon_{max, L}$) calculated based on a deflection amount measured by a three-point bending test when a ratio of a support span to the average thickness is 6 or more and 7 or less being 10% or more.
(3) The aerogel as described in aspect (1) or (2), in which a thermal conductivity at 25°C is 20 mW/m K or less.
(4) The aerogel as described in any one of aspects (1) to (3), in which a bulk density ($\rho_b$) of the aerogel is 0.3 g/cm$^3$ or less.
(5) An aerogel particle formed by fragmenting the aerogel as described in any one of aspects (1) to (4) into particles.

Effects of the Invention

According to the present invention, it is possible to provide an aerogel having excellent fracture resistance when deflection occurs, regardless of its thickness, and having high transparency (in particular, high visible light transparency).
In addition, according to the present invention, it is possible to provide an aerogel having high fracture resistance when deflection occurs and having high thermal insulating characteristics.

BRIEF DESCRIPTION OF THE DRAWINGS

FIG. 1 is a schematic diagram illustrating an example of a microstructure of an aerogel according to the present invention;

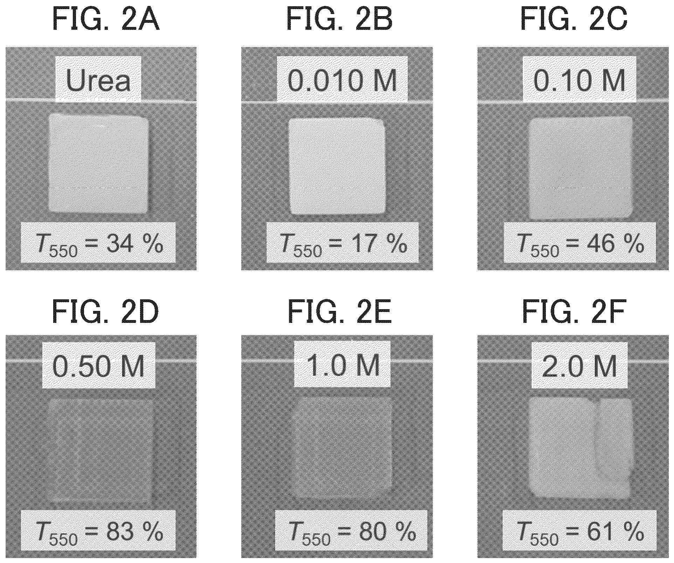

FIGS. 2A to 2E are photographs of an appearance of an aerogel in a case where urea is used as a basic catalyst and in a case where tetramethyl ammonium hydroxide (TMAOH) having five different concentrations is used as the basic catalyst, in which FIG. 2A illustrates a case where urea is used as the basic catalyst, FIG. 2B illustrates a case where a TMAOH concentration is 0.010 M, FIG. 2C illustrates a case where the TMAOH concentration is 0.10 M, FIG. 2D illustrates a case where the TMAOH concentration is 0.50 M, FIG. 2E illustrates a case where the TMAOH concentration is 1.0 M, and FIG. 2F illustrates a case where the TMAOH concentration is 2.0 M;
FIGS. 3A to 3D illustrate FE-SEM images of the aerogels in the case where urea is used as the basic catalyst and in the case where tetramethyl ammonium hydroxide (TMAOH) having three different concentrations is used as the basic catalyst, in which FIG. 3A illustrates the case where urea is used as the basic catalyst, FIG. 3B illustrates a case where a TMAOH concentration is 0.010 M, FIG. 3C illustrates a case where the TMAOH concentration is 0.50 M, and FIG. 3D illustrates a case where the TMAOH concentration is 2.0 M;
FIG. 4 is a photograph of a string-like aerogel showing high flexibility such as nylon yarn;
FIG. 5 is a photograph illustrating an example of a state in which a three-point bending test is performed on the produced aerogel;
FIGS. 6A to 6E illustrate FE-SEM images of aerogels according to inventive examples and comparative examples, in which FIG. 6A is an FE-SEM image of an aerogel according to Inventive Example 1, FIG. 6B is an FE-SEM image of an aerogel according to Inventive Example 2, FIG. 6C is an FE-SEM image of an aerogel according to Inventive Example 3, FIG. 6D is an FE-SEM image of an aerogel according to Inventive Example 4, and FIG. 6E is an FE-SEM image of an aerogel according to Comparative Example 1;
FIGS. 7A to 7E illustrate STEM images of the aerogels according to inventive examples and comparative examples, in which FIG. 7A is an STEM image of the aerogel according to Inventive Example 1, FIG. 7B is an STEM image of the aerogel according to Inventive Example 2, FIG. 7C is an STEM image of the aerogel according to Inventive Example 3, FIG. 7D is an STEM image of the aerogel according to Inventive Example 4, and FIG. 7E is an STEM image of the aerogel according to Comparative Example 1;

FIG. 8 is a transmittance spectrum when a sample having a thickness of 5.0 mm is irradiated with light in a visible light region (wavelength: 380 nm to 780 nm) in the aerogels according to Inventive Examples 1 to 4 and Comparative Example 1; and

FIG. 9 is a stress-strain curve of the aerogels according to Inventive Examples 1 to 4 and Comparative Example 1, which is obtained by a three-point bending test.

PREFERRED MODE FOR CARRYING OUT THE INVENTION

Hereinafter, specific embodiments of the present invention will be described in detail with reference to the drawings. The present invention is not limited to the following embodiments, and various modifications can be made without departing from the scope of the present invention.

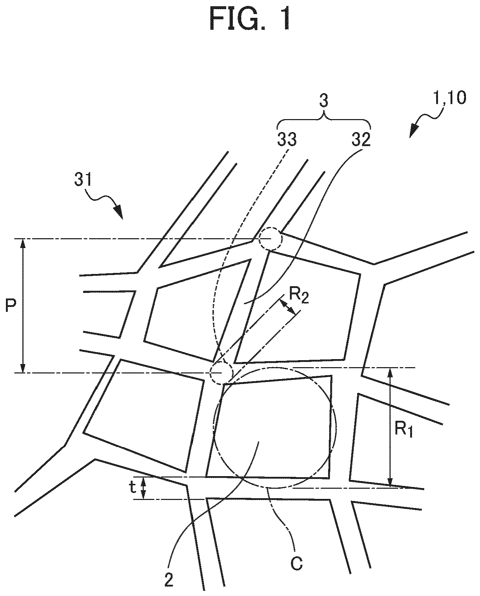

As illustrated in FIG. 1, an aerogel 1 according to the present invention is formed of a fibrous skeleton 3 continuous in a mesh form, and a plurality of pores 2 defined by the skeleton 3. The aerogel 1 contains Si. The skeleton 3 has substantially polygonal outline parts 31 which respectively form outlines of the plurality of pores 2. The outline parts 31 each have a plurality of branch parts 32, which are parts corresponding to sides of the substantially polygonal shape, and a plurality of nodes 33, which are parts corresponding to vertices of the substantially polygonal shape. An average arrangement pitch between adjacent nodes 33 among the nodes 33 constituting the pores 2 is 1.50 times or more an average diameter $R_2$ of inscribed circles drawn inside the parts corresponding to the nodes 33. A transmittance ($\tau_{550}$) at a wavelength of 550 nm is 60% or more at a thickness of 10 mm.

The aerogel 1 according to the present invention contains Si. A transmittance ($\tau_{550}$) at a wavelength of 550 nm is 60% or more at a thickness of 10 mm. An average thickness is 5 mm or more. A maximum bending strain ($\varepsilon_{max, L}$) calculated based on a deflection amount measured by a three-point bending test when a ratio of a support span to the average thickness is 6 or more and 7 or less is 10% or more.

The present inventors have focused on the flexibility of the microstructure 10 of the aerogel 1 containing Si, and have found that the bending deformability of the branch parts 32 can be enhanced by increasing the average arrangement pitch between the adjacent nodes 33 in the fibrous skeleton 3 constituting the aerogel 1, relative to the inscribed circle of the nodes 33. More specifically, by increasing the average arrangement pitch of the adjacent nodes 33 relative to the inscribed circles of the nodes 33, the skeleton 3 has a more fibrous microstructure, so that the bending deformability of the skeleton 3 is further enhanced when receiving an external force. Therefore, the maximum bending strain ($\varepsilon_{max, L}$) of the aerogel 1 can be increased, and as a result, the aerogel 1 is less likely to be fractured even when deflection occurs in the aerogel 1, regardless of its thickness. Furthermore, the present inventors have found that the aerogel 1 can implement both excellent fracture resistance when deflection occurs and high transmittance ($\tau_{550}$) when irradiated with visible light. In particular, even when the transmittance ($\tau_{550}$) at a wavelength of 550 nm of the aerogel 1 is increased and a domain size of the microstructure 10 (that is, sum of pore diameter $R_1$ of pore 2 and thickness t of branch part 32 ($R_1+t$)) is decreased accordingly, the bending deformability of the skeleton 3 when receiving an external force can be enhanced consistently by increasing the average arrangement pitch of the adjacent nodes 33 relative to the inscribed circles of the nodes 33. Therefore, regardless of the thickness, that is, for example, even in a case of having a large thickness such that the average thickness is 5 mm or more, it is possible to provide the aerogel 1 having excellent fracture resistance when deflection occurs and having high transparency (particularly high visible light transparency).

[Regarding Configuration of Aerogel]

As illustrated in FIG. 1, the aerogel 1 has the Si-containing microstructure 10 formed by the fibrous skeleton 3 which is continuous in a mesh form and the plurality of pores 2 which are defined by the skeleton 3.

(Microstructure of Aerogel)

The microstructure 10 of the aerogel 1 is a microstructure containing a silicon atom in a molecule, and examples thereof include a microstructure such as polysilsesquioxane. The polysilsesquioxane microstructure can be formed by hydrolysis and polycondensation reactions of silicon alkoxide. In particular, a polymethylsilsesquioxane (PMSQ, Me-SiO$_{1.5}$) aerogel can form a transparent aerogel, and can be formed by a combination of a hydrolysis and polycondensation reaction of methyltrialkoxysilane (MeSi(OR)$_3$) and a surfactant as a phase separation inhibitor. Examples of the hydrolysis and polycondensation reaction at the time of forming the PMSQ aerogel include a hydrolysis reaction using an acid catalyst represented by the following formula (I) and a polycondensation reaction using a basic catalyst represented by the following formula (II).

$$MeSi(OR)_3 + 3H_2O \rightarrow MeSi(OH)_3 + 3ROH: \qquad \text{Formula (I)}$$

$$MeSi(OH)_3 \rightarrow MeSiO_{1.5} + 1.5H_2O: \qquad \text{Formula (II)}$$

(Skeleton of Aerogel)

The aerogel 1 according to the present invention has, as the microstructure 10, the fibrous skeleton 3 continuous in a mesh form. Accordingly, the skeleton 3 of the aerogel 1 is easily deformed when receiving an external force, and thus it is possible to enhance the fracture resistance upon deflection of the aerogel.

Here, it is preferable that the skeleton 3 of the aerogel 1 has the substantially polygonal outline parts 31 which respectively form the outlines of the plurality of pores 2, and the outline parts 31 each have the plurality of branch parts 32, which are parts corresponding to the sides of the substantially polygonal shape, and the plurality of nodes 33, which are parts corresponding to the vertices of the substantially polygonal shape. Accordingly, the aerogel 1 can have a microstructure sufficient to express high thermal insulating characteristics and high visible light transparency, and when deflection occurs in the aerogel 1, the force due to the deflection is dispersed and absorbed throughout a wider region of the aerogel 1 by the skeleton 3 having the branch parts 32 and the nodes 33, so that the fracture resistance of the aerogel 1 can be enhanced.

In particular, in the skeleton 3 of the aerogel 1, it is preferable that an average of arrangement pitches P (average arrangement pitch) between the adjacent nodes 33 is 1.50 times or more an average of diameters $R_2$ (average diameter) of inscribed circles drawn at the nodes 33 (inscribed circles of nodes 33). In the microstructure 10 of the aerogel 1, the branch part 32 is relatively long and the node 33 is relatively small, so that the skeleton 3 easily takes a more fibrous microstructure, and the bending deformability of the branch part 32 is enhanced accordingly. Therefore, the flexibility of the aerogel 1 can be enhanced, and as a result, the fracture resistance when the deflection of the aerogel 1 occurs can be further enhanced.

Here, the diameter $R_2$ of the inscribed circle drawn in the node 33 is the maximum diameter of the inscribed circle that can be drawn around the node 33 without protruding from the skeleton 3. The substantially polygonal shape of the outline part 31 is not limited to a substantially quadrangular shape as illustrated in FIG. 1, and may be, for example, a substantially pentagonal shape or a substantially hexagonal shape. In addition, the branch parts 32 correspond to the sides of the substantially polygonal shape, but are not limited to a linear shape, and may be partially or entirely bent.

The flexibility of the fibrous skeleton 3 of the aerogel 1, which is continuous in a mesh form, can be adjusted by changing conditions during the production of the aerogel 1. As a specific example thereof, by adjusting conditions when performing a hydrothermal treatment on the gel subjected to aging after gelation, the average arrangement pitch of the adjacent nodes 33 is long relative to the average diameter of the inscribed circles of the nodes 33, and the fibrous skeleton 3 continuous in a mesh form can be formed, so that it is possible to enhance the fracture resistance when deflection occurs in the aerogel. Here, a temperature at which the hydrothermal treatment is performed is not particularly limited, and is preferably in a range of 60°C or higher and 70°C or lower to appropriately advance the polycondensation reaction and further enhance the bending deformability of the aerogel.

In addition, the skeleton 3 of the aerogel 1 can be adjusted by changing a type of the surfactant used in the production of the aerogel 1, a ratio of concentrations of the surfactant and silicon alkoxide, or addition amounts of the surfactant and silicon alkoxide.

Here, in a case where a surfactant having a large molecular weight is used as the surfactant to be used during the production of the aerogel 1, the microstructure 10 having the skeleton 3 closer to a fibrous shape can be easily obtained. On the other hand, from the viewpoint of providing the fibrous skeleton 3 to the microstructure 10, it is also useful to adjust the composition of the sol during the production of the aerogel 1 so that an amount of an aqueous solvent is increased.

The aerogel 1 according to the present invention has high fracture resistance when deflection occurs regardless of its thickness. Here, in the aerogel 1, the maximum bending strain ($\varepsilon_{max, L}$) calculated based on the deflection amount measured by the three-point bending test when the ratio of the support span to the average thickness is 6 or more and 7 or less is preferably 10% or more, and more preferably 15% or more. Accordingly, since the amount of the bending strain allowed when deflection occurs in the aerogel 1 is increased, the aerogel 1 is less likely to be fractured even when deflection occurs in the aerogel 1. The maximum bending strain ($\varepsilon_{max, L}$) obtained by the three-point bending test is preferably a numerical value when the ratio of the support span to the average thickness is in the range of 6 or more and 7 or less, and more preferably a numerical value when the ratio of the support span to the average thickness is 6, which is a more severe condition. By setting the maximum bending strain ($\varepsilon_{max, L}$) obtained by the three-point bending test when the ratio of the support span to the average thickness is 6 to 10% or more or 15% or more, the maximum bending strain ($\varepsilon_{max, L}$) obtained by the three-point bending test when the ratio of the support span to the average thickness is in the range of 6 or more and 7 or less can be guaranteed to be 10% or more or 15% or more.

A thickness of the aerogel 1 is not particularly limited, and the average thickness is preferably 5 mm or more, and particularly 7 mm or more. In the aerogel 1 according to the present invention, it is possible to enhance the fracture resistance when deflection occurs even in a case where the thickness is large in this way. An upper limit of the average thickness of the aerogel 1 is not particularly limited, and may be, for example, 100 mm.

(Pore of Aerogel)

The aerogel 1 according to the present invention has, as the microstructure 10, the plurality of fine pores 2 defined by the skeleton 3. Accordingly, the visible light transmitted through the aerogel 1 is less likely to be scattered, and thus the light transmittance of the visible light of the aerogel can be increased.

The microstructure 10 of the aerogel 1 can be adjusted by changing the conditions for producing the aerogel 1. As a specific example thereof, when the aerogel 1 is produced, the temperature of the solution when adding the basic catalyst to the sol is set in the range of 0°C or higher and 10°C or lower, and preferably 0°C or higher and 5°C or lower, and the sol after addition of the basic catalyst is stirred at an appropriate rotational speed for a time period in the range of 1 minute or more and 60 minutes or less, so that a more uniform microstructure 10 that minimizes light scattering is uniformly formed over a wide range, and thus it is possible to form the aerogel 1 having high transparency (particularly high visible light transparency).

In addition, finer pores 2 can also be formed by changing the type and the concentration of the basic catalyst used for gelation of the sol of the silicon alkoxide during the production of the aerogel 1. FIGS. 2A to 2F are photographs of the appearance of the aerogel when gelation is performed using urea as the basic catalyst and when tetramethyl ammonium hydroxide (TMAOH) which is an organic basic catalyst is used as the basic catalyst and the concentration thereof is changed, in which FIG. 2A illustrates a case where urea is used as the basic catalyst, FIG. 2B illustrates a case where a TMAOH concentration is 0.010 M, FIG. 2C illustrates a case where the TMAOH concentration is 0.10 M, FIG. 2D illustrates a case where the TMAOH concentration is 0.50 M, FIG. 2E illustrates a case where the TMAOH concentration is 1.0 M, and FIG. 2F illustrates a case where the TMAOH concentration is 2.0 M. Here, the aerogel illustrated in FIGS. 2A to 2F is obtained by the same method as in Example 1 described later except for presence or absence of the addition of the basic catalyst and the addition amount of the basic catalyst.

Here, according to FIGS. 2A to 2F, when tetramethyl ammonium hydroxide (TMAOH) which is an organic basic catalyst is used as the basic catalyst, and the concentration thereof is 0.50 M or more, finer pores 2 can be formed, and as a result, the transmittance ($\tau_{550}$, denoted as $T_{550}$ in FIGS. 2A to 2F) at a wavelength of 550 nm can be increased. On the other hand, in the case of gelation using urea as the basic catalyst, the transmittance ($\tau_{550}$) at a wavelength of 550 nm is 34%, and in the case where the concentration of TMAOH is as low as 0.010 M, the transmittance ($\tau_{550}$) at a wavelength of 550 nm is also low.

The pore 2 of the aerogel 1 can also be made finer by reducing the molecular weight of the surfactant to be used during the production of the aerogel 1. By making the pores 2 fine in this way, it is possible to obtain an aerogel having higher transmittance when irradiated with visible light.

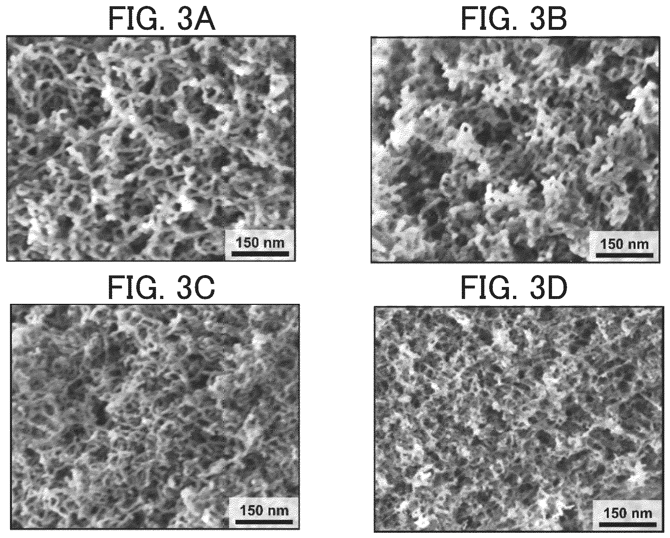

It is considered that even when the concentration of TMAOH is changed, the aerogel 1 consistently forms a fibrous skeleton 3. FIGS. 3A to 3D are FE-SEM images of the aerogels when gelation is performed using urea as the basic catalyst and when tetramethyl ammonium hydroxide (TMAOH), which is an organic basic catalyst, is used as the basic catalyst and its concentration is changed. Specifically, FIG. 3A illustrates a case where urea is used as the basic catalyst, FIG. 3B illustrates a case where the TMAOH concentration is 0.010 M, FIG. 3C illustrates a case where the TMAOH concentration is 0.50 M, and FIG. 3D illustrates a case where the TMAOH concentration is 2.0 M. According to FIGS. 3A to 3D, whether tetramethyl ammonium hydroxide (TMAOH) or urea is used as the basic catalyst, there is no significant difference in that the obtained microstructure 10 has a fibrous skeleton 3.

An average pore diameter of the plurality of pores 2 included in the microstructure 10 of the aerogel 1 is not particularly limited, and may be, for example, in a range of 5 nm or more and 100 nm or less. Here, the average pore diameter of the plurality of pores 2 is an average of the pore diameters $R_1$ of the pores 2 illustrated in FIG. 1. The pore diameter $R_1$ of the pores 2 is the average of the diameters of the pores 2. For example, as illustrated in FIG. 1, a diameter of the virtual circle C can be set to the pore diameter $R_1$ of the pore 2 when a virtual circle C is drawn such that an area of an opening portion of the pore 2 outside the virtual circle C is equal to an area of a portion not opened by the pore 2 inside the virtual circle C.

In addition, an average of thicknesses t of the branch parts 32 constituting the microstructure 10 of the aerogel 1 is also not particularly limited, and may be, for example, in a range of 1 nm or more and 20 nm or less.

The aerogel 1 according to the present invention has high transparency (particularly high visible light transparency). Here, in the aerogel 1, the transmittance ($\tau_{550}$) at a wavelength of 550 nm is preferably 60% or more and more preferably 80% or more at a thickness of 10 mm. In the aerogel 1 according to the present invention, the transmittance ($\tau_{550}$) when irradiated with visible light having a wavelength of 550 nm is high, so that the uniformity of the microstructure 10 can be enhanced. Therefore, local stress concentration on the skeleton 3 is less likely to occur, and the domain size of the microstructure 10 of the aerogel 1 (that is, sum ($R_1$+t) of pore diameter $R_1$ of pore 2 and thickness t of branch part 32) can be reduced. At this time, the skeleton 3 has a more fibrous microstructure as described above, so that the bending deformability of the skeleton 3 when receiving an external force is increased even when the domain size of the microstructure 10 is small, and thus, it is possible to enhance the fracture resistance when deflection occurs in the aerogel 1.

(Preferred Characteristics of Aerogel)

The aerogel 1 according to the present invention preferably has a density ($\rho_b$) of 0.3 g/cm$^3$ or less. Accordingly, the density of the skeleton 3 of the aerogel 1 is reduced, so that more voids are formed in the aerogel 1, and thus the thermal conductivity of the aerogel 1 can be reduced to improve the thermal insulating characteristics. Here, in the aerogel 1 according to the present invention, the thermal conductivity at 25°C is preferably 20 mW/m K or less, and more preferably 15 mW/m K or less from the viewpoint of being suitably used for a thermal insulating material. The aerogel 1 according to the present invention has a low density in this way, so that even when the thermal insulating characteristics are high, it is possible to enhance the fracture resistance when deflection occurs, and thus it is possible to suitably use the aerogel 1 as a flexible thermal insulating material for a window or the like.

(Shape of Aerogel)

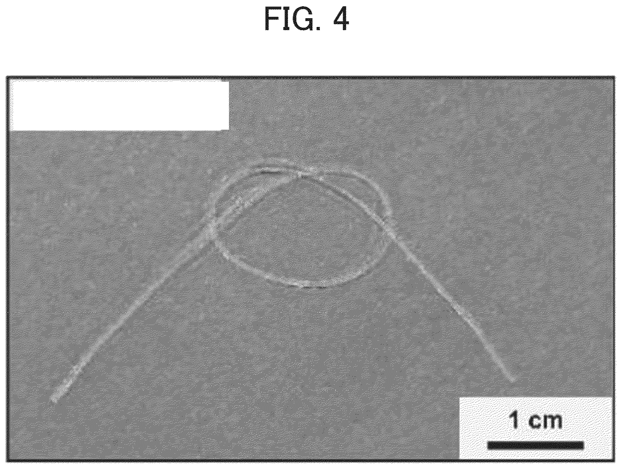

The entire shape of the aerogel 1 is formed based on a shape of a reaction vessel when the silicon alkoxide is subjected to the polycondensation and gelation, and can be formed in various shapes such as a string shape as illustrated in FIG. 4 in addition to a plate shape. In particular, when the aerogel 1 is formed in a string shape, it is also possible to impart very high flexibility to the aerogel 1 like nylon yarn. On the other hand, the aerogel 1 may be in the form of an aerogel particle formed by fragmentation into particles.

[Regarding Production Method]

Next, an example of the method for producing the aerogel according to the present invention will be described.
The method for producing the aerogel according to the present invention is not particularly limited, and examples thereof include a method including: a hydrolysis step [step 1] of hydrolyzing an organosilicon alkoxide; a solution preparation step [step 2] of adding a surfactant and water to the obtained hydrolysate to obtain a uniform solution; a gelation step [step 3] of adding a basic catalyst to the solution to polymerize the hydrolysate, thereby forming a wet gel; a cleaning step [step 4] of cleaning the obtained gel; and a supercritical drying step [step 5] of supercritical drying the gel after cleaning.
Here, the hydrolysis step [step 1] is a step of mixing a silicon alkoxide such as methyltrimethoxysilane (MTMS) with an aqueous solution of an acid such as acetic acid. Accordingly, an alkoxy group of the silicon alkoxide is hydrolyzed to produce a hydrolysate having a silanol group.
The solution preparation step [step 2] is a step of adding a surfactant and water to the hydrolysate in the hydrolysis step [step 1] to obtain a uniform solution.
The hydrolysis step [step 1] and the solution preparation step [step 2] may be performed simultaneously. For example, the surfactant to be added in the solution preparation step [step 2] may be simultaneously added in the hydrolysis step [step 1].
The gelation step [step 3] is a step of adding a basic catalyst to the solution obtained in the solution preparation step [step 2]. By adding a basic catalyst to the solution, a hydrolysate of silicon alkoxide is polymerized to form a wet gel. Here, as the basic catalyst, an ammonium salt or the like can be suitably used, and for example, tetramethyl ammonium hydroxide (TMAOH) can be used. The hydrogen ion concentration (pH) of the sol after the addition of the basic catalyst is preferably in the range of 9.0 or more and 14.0 or less, and more preferably in the range of 12.5 or more and 13.5 or less. In this way, when the pH of the sol is increased, decomposition and re-formation of an unstable siloxane bond (effect close to so-called Ostwald ripening) are likely to occur, and as described later, by lowering the temperature of the solution when adding the basic catalyst, the uniformity of the obtained gel can be enhanced. As a result, the transparency of the aerogel can be enhanced.
Here, to enhance the uniformity of the obtained gel and the visible light transparency of the aerogel, the temperature of the solution when adding the basic catalyst is preferably in the range of 0°C or higher and 10°C or lower, and more preferably 0°C or higher and 5°C or lower. At this time, the solution may be placed in an ice bath in order to lower the temperature of the solution when adding the basic catalyst. Regarding this point, when the temperature at the time of adding the basic catalyst to the sol is 10°C or higher, the polycondensation reaction proceeds too rapidly, so that the uniformity of the obtained gel is reduced, resulting in unevenness in appearance and reduced transparency of the aerogel 1.
In addition, from the viewpoint of enhancing the visible light transparency of the aerogel, it is preferable to stir the solution after adding the basic catalyst at an appropriate rotational number for a time period in the range of 1 minute or more and 60 minutes or less. At this time, since the viscosity of the sol is high, in order to obtain the aerogel 1 having high visible light transparency, the sol is preferably stirred to homogeneity in a short time.

From the viewpoint of enhancing the mechanical strength of the aerogel, the obtained gel is preferably aged at room temperature or a temperature higher than room temperature and equal to or lower than the boiling point of the solvent for, for example, 24 hours or more. Furthermore, by adjusting conditions during the hydrothermal treatment of the gel after aging, the fibrous skeleton 3 continuous in a mesh form can be formed, and the ratio of the average arrangement pitch of the adjacent nodes 33 to the average diameter of the inscribed circles of the nodes 33 in the skeleton 3 is increased. Therefore, it is possible to enhance the fracture resistance when deflection occurs in the aerogel. In this regard, the temperature of the hydrothermal treatment performed on the gel after aging is not particularly limited, and is preferably in the range of 60°C or higher and 70°C or lower from the viewpoint of further enhancing the bending deformability and the flexibility of the skeleton by appropriately advancing the polycondensation reaction.

The cleaning step [step 4] is a step of cleaning the obtained gel. As a cleaning solvent for the gel, water, alcohol, or a mixture thereof can be used. Among these, as the alcohol, it is possible to use an alcohol which is in a liquid state at room temperature (for example, 20°C), and for example, methanol, ethanol, 1-propanol, or 2-propanol can be used.

The supercritical drying step (step 5) is a step of drying, with a supercritical fluid, the gel after cleaning. The supercritical fluid is a fluid having a temperature and a pressure above its critical points, and examples thereof include carbon dioxide having a temperature and a pressure above its critical points of 31°C and 7.4 MPa.

When the cleaning step [step 4] and the supercritical drying step [step 5] are performed on the obtained gel, raw materials such as a surfactant and a basic catalyst that could be impurities of the aerogel 1 and decomposition products thereof are substantially removed. At this time, raw materials such as a surfactant and a basic catalyst and decomposition products thereof may still remain in the obtained aerogel 1 as unavoidable components.

The aerogel 1 is not limited to a homogeneous aerogel, and may be included in the form of a composite. Here, examples of the composite include a composite including at least a base material and a reinforcing material laminated on the base material. One or both of the base material and the reinforcing material can be formed of the above-described aerogel 1. Examples of the composite include a composite in which other substances such as fibers are dispersed in the aerogel 1.

Examples of a method for producing the composite including the aerogel 1 include a method comprising adding a fibrous substance to the solution before the gelation step [step 3] to disperse or precipitate (or float) the fibrous substance, and then performing the gelation step [step 3] of adding a basic catalyst to polymerize the hydrolysate, thereby forming a wet gel. Examples of another example of the method for producing the composite include a method in which a fibrous substance is first molded, the solution before the gelation step [step 3] is impregnated into the fibrous substance, and then the gelation step [step 3] is performed.

In particular, when a composite including the aerogel 1 is prepared, to obtain a composite having high light transmittance by increasing the affinity between the solution before the gelation step [step 3] and the fibrous substance, it is preferable to use a thin fibrous substance, and more specifically, it is preferable to use a fibrous substance having a fiber diameter of 1 nm or greater. Similarly, from the viewpoint of obtaining a composite having high light transmittance, it is preferable to perform the gelation step [step 3] in a state where the solution before the gelation step [step 3] is uniformly mixed with the fibrous substance.

Although the embodiments of the present invention have been described above, the present invention is not limited to the above embodiments, and various modifications can be made within the scope of the present invention, including all aspects included in the concept and claims of the present invention.

EXAMPLES

Next, in order to further clarify the effects of the present invention, inventive examples and comparative examples will be described, but the present invention is not limited to the inventive examples.

(Inventive Examples 1 to 4)

Starting compositions of Inventive Examples 1 to 4 are shown in Table 1. Methyltrimethoxysilane (hereinafter, may be referred to as "MTMS", manufactured by Shin-Etsu Chemical Co., Ltd.) and a 5 mM aqueous solution of acetic acid (hereinafter, may be referred to as "HOAc", purity $\geq$ 99.7%, manufactured by Kishida Chemical Co., Ltd.) in amounts shown in Table 1 were mixed in a reaction vessel and continuously stirred at room temperature for 15 minutes to hydrolyze MTMS, thereby obtaining a uniform sol. Thereafter, surfactants of the type and addition amount shown in Table 1 and distilled water (hereinafter, may be simply referred to as "$H_2O$") of the addition amount shown in Table 1 were added to the obtained uniform sol, and stirring was continued for about 1 hour to make the sol uniform at room temperature.

Here, among the surfactants shown in Table 1, "F127" is Pluronic F127 which is a nonionic surfactant ($EO_{106}PO_{70}EO_{106}$, maximum molecular weight $M_w$: 12,600, HLB value ranging from 18 to 23, manufactured by Sigma-Aldrich Co. LLC). "F68" is Pluronic F68 which is a nonionic surfactant ($EO_{76}PO_{29}EO_{76}$, maximum molecular weight $M_w$: 8,400, HLB value > 24, manufactured by Sigma-Aldrich Co. LLC). "P105" is Synperonic P105 which is a nonionic surfactant ($EO_{37}PO_{56}EO_{37}$, maximum molecular weight $M_w$: 6,500, HLB value ranging from 12 to 18, manufactured by Croda Japan K.K.). "P94" is Pluronic P94 which is a nonionic surfactant ($EO_{26}PO_{48}EO_{26}$, maximum molecular weight $M_w$: 5,000, HLB value: 13.5, manufactured by BASF).

Next, the obtained sol was placed in an ice bath together with the reaction vessel and cooled to 4°C over 30 minutes. While stirring in an ice bath to such an extent that bubbles were not generated, a 0.50M aqueous solution of tetramethyl ammonium hydroxide (hereinafter may be referred to as "TMAOH", 25% aqueous solution, manufactured by Tokyo Chemical Industry Co., Ltd.) which is a basic catalyst in an addition amount shown in Table 1 was carefully added, followed by stirring for 3 minutes. Here, the pH (hydrogen ion concentration) of the sol was measured, and the values shown in Table 1 were obtained. Thereafter, the sol was transferred to a closed vessel and allowed to stand at room temperature for 1 hour for gelation. At this time, the gelation of the sol occurred within 15 minutes. Further, the obtained gel was aged by standing still at 60°C for 3 days, and then subjected to the hydrothermal treatment at 60°C for 24 hours.

In the cleaning of the gel after the hydrothermal treatment, in order to prevent cracking of the gel due to an osmotic pressure, first to fifth cleaning operations were performed with a mixed solvent of $H_2O$ and methanol (hereinafter, may be referred to as "MeOH", purity ≥ 99.5%, manufactured by Kishida Chemical Co., Ltd.) at vol% ratios of $H_2O$:MeOH as follows: 100:0, 90:10, 70:30, 50:50, 30:70, 10:90, and 0:100. Sixth to eighth cleaning operations were performed with 2-propanol (hereinafter, may be referred to as "IPA", purity ≥ 99.0%, manufactured by Kishida Chemical Co., Ltd.), and the gel was immersed at 60°C for 8 hours or more. The obtained alcogel was subjected to supercritical drying for 10 hours with carbon dioxide at a pressure of 14 MPa and a temperature of 80°C, which is a supercritical fluid, thereby obtaining an aerogel (PMSQ aerogel).

(Comparative Example 1)

Starting compositions of Comparative Example 1 are shown in Table 1. In a reaction vessel, 12.0 mL of a 5 mM aqueous solution of acetic acid, 3.0 g of urea, and 0.40 g of a surfactant were mixed in the reaction vessel and continuously stirred at room temperature for 30 minutes to obtain a homogeneous mixture. Here, n-hexadecyltrimethylammonium chloride (CTAC, maximum molecular weight $M_w$: 320, HLB value: 15.8, manufactured by Tokyo Chemical Industry Co., Ltd.) which is a cationic surfactant was used as the surfactant.

Next, 5.0 mL of MTMS was added to the reaction vessel, followed by continuously stirring the mixture at room temperature for 30 minutes to hydrolyze MTMS, thereby obtaining a uniform sol.

The obtained sol was transferred to a closed vessel and allowed to stand at 60°C for 4 days, thereby gelling and aging the sol. The pH of the solution contained in the gel after aging was measured, and the values shown in Table 1 were obtained. The gel after aging was subjected to the hydrothermal treatment at 60°C for 24 hours.

In the cleaning of the gel after the hydrothermal treatment, in order to prevent cracking of the gel due to an osmotic pressure, the first cleaning operation to the third cleaning operation were performed with MeOH, the fourth cleaning operation to the sixth cleaning operation were performed with 2-propanol, and the gel was immersed at 60°C for 8 hours or more. The obtained alcogel was subjected to supercritical drying for 10 hours with carbon dioxide at a pressure of 14 MPa and a temperature of 80°C, which is a supercritical fluid, thereby obtaining an aerogel (PMSQ aerogel).

[Various Measurement and Evaluation Method]

The aerogels according to inventive examples and comparative examples were subjected to the following characteristic evaluation. Evaluation conditions of each characteristic are as follows.

[1] Calculation on Bulk Density of Aerogel

The bulk density ($\rho_b$) of the obtained aerogel was calculated based on measured values of a diameter, a height, and a weight of the aerogel formed in a cylindrical shape. The results are shown in Table 2.

[2] Measurement on Transmittance of Aerogel

The transmittance of the obtained aerogel was determined based on spectral data obtained by using a V-670 UV-Vis-NIR spectrophotometer equipped with an integrating sphere (manufactured by JASCO Corporation (Japan)). Here, a value of the total transmittance when a sample having a thickness of 5.0 mm was irradiated with visible light having a wavelength of 550 nm was converted into the total transmittance ($T_{550}$) of a sample having a thickness of 10 mm using the Lambert-Beer equation. The results are shown in Table 2.

[3] Evaluation on Bending Characteristics of Aerogel

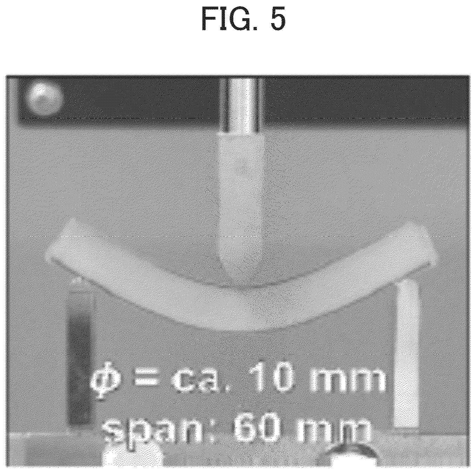

The bending characteristics of the obtained aerogel were measured by a three-point bending test using a material testing machine (AUTOGRAPH AG-X plus, manufactured by Shimadzu Corporation). Here, in the three-point bending test, a cylindrical sample having a longitudinal length (height direction of cylinder) of 80 mm was used, and was disposed such that a radial direction of a bottom surface of the cylinder was the thickness direction of the sample. At this time, an average thickness of the sample was as shown in Table 2. In addition, as illustrated in FIG. 5, two fulcrums were provided under the sample, and a support span (span length) along the longitudinal direction of the sample was set to the value shown in Table 2. Therefore, a ratio of the support span to the average thickness of the aerogel was as shown in Table 2. A head of a testing machine was provided equidistant along the longitudinal direction of the sample between two fulcrums provided under the sample. A load was applied to the sample from above by the head of the tensile testing machine to deform the sample, and the amount of downward deflection of the portion where the load was applied when the sample was fractured was measured. The load applied to the sample by the head of the tensile testing machine was set so that a crosshead speed was 0.5 mm/min.

A maximum bending stress ($\sigma_{max, L}$) and a maximum bending strain ($\varepsilon_{max, L}$) of the sample when the support span is L [mm] were calculated, using the following formulae (a) and (b), based on a load F [N] applied to the sample when the sample was fractured and a magnitude $\Delta l$ [mm] of the downward deflection amount of the portion where the load was applied, which were measured here. In the following formulae, D is the diameter of the cylindrical sample. The results are shown in Table 2.

$$\sigma_{max, L} = 8L \cdot F/\pi D^3: \text{ Formula (a)}$$

$$\varepsilon_{max, L} = 6D \cdot \Delta l/L^2: \text{ Formula (b)}$$

In addition, a minimum tube diameter R at which the obtained aerogel can be bent was calculated using the following formula (c). Here, the minimum tube diameter R at which the obtained aerogel can be bent is obtained from a curvature of an arc obtained by approximating, to an arc, an inner curvature between two fulcrums of the sample immediately before the sample is fractured. The results are shown in Table 2.

$$R = a/6 \times L \times \varepsilon_{max, L} + (3/a)^2 \times 1/\varepsilon_{max, L} - 2D: \text{ Formula (c)}$$

$$a = L/D: \text{ Formula (d)}$$

[4] Observation on Structure of Pore and Skeleton of Aerogel

The structure of the pore and the skeleton of the obtained aerogel was observed using a field emission scanning electron microscope (FE-SEM: Regulus 8220, manufactured by Hitachi High-Tech Corporation) and a scanning transmission electron microscope (STEM: JEM-1400Plus, manufactured by JEOL Ltd.). At this time, the aerogel was crushed with a fine sandpaper of #2,000 or more before the observation. Aerogel fragments of a visually confirmed size that were attached to the sandpaper were removed by blowing them off with a blower. The remaining fine-size aerogels, which remained on the sandpaper, were difficult to blow off with a blower and could not be visually confirmed, were then transferred onto a carbon tape by attaching a portion of the sandpaper with the aerogels to the carbon tape. Finally, the sandpaper was attached to a sample table to perform each observation. Among them, observation by FE-SEM was performed by observing a 640 nm × 500 nm square as one field of view at a magnification of 200,000 times. In addition, observation by STEM was performed by observing a 560 nm × 480 nm square as one field of view at a magnification of 100,000 times. The observation on the structure was performed without metal sputtering on the aerogels in order to prevent the structure from being changed due to deposition of the sputtered metal.

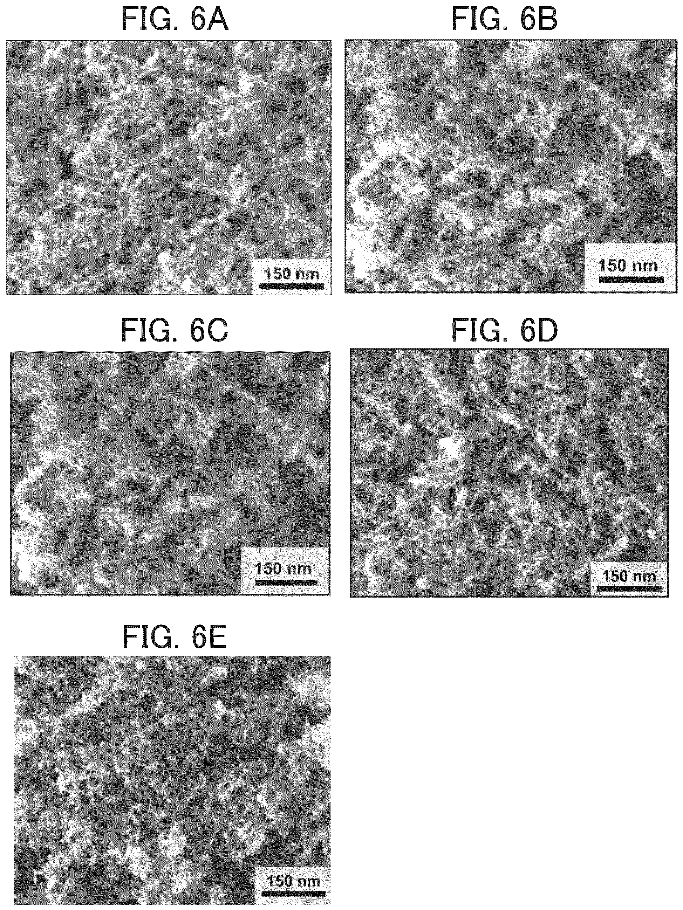

FIGS. 6A to 6E illustrate FE-SEM images of the aerogels according to inventive examples and comparative examples. From the obtained FE-SEM images, 50 randomly extracted regions of the fibrous skeleton where the substantially polygonal outline parts of the pores, including their branch parts and nodes, were clearly visible were analyzed. A distance from the center of a certain node to the center of the adjacent node was measured, and the average of the obtained measurement values was calculated to determine an average arrangement pitch between the adjacent nodes.

In addition, from the obtained FE-SEM images, 50 regions where the substantially polygonal outline parts of the pore clearly appeared and the nodes corresponding to the vertices of the substantially polygonal shape clearly appeared were randomly extracted so as not to be biased as much as possible, a diameter of an inscribed circle drawn in the node was measured for each node, and an average of the obtained measurement values was calculated, thereby calculating an average diameter of the inscribed circles drawn in the parts corresponding to the nodes.

Then, a magnification of the average arrangement pitch of the adjacent nodes with respect to the average diameter of the inscribed circles drawn in the parts corresponding to the nodes was obtained by using these calculated values. The results are shown in Table 2.

Further, from the obtained FE-SEM images, 50 pores were randomly extracted so as not to be biased as much as possible, a pore diameter was measured for each of the pores, and an average of the obtained measurement values was calculated, thereby calculating an average pore diameter of the pores. The results are shown in Table 2.

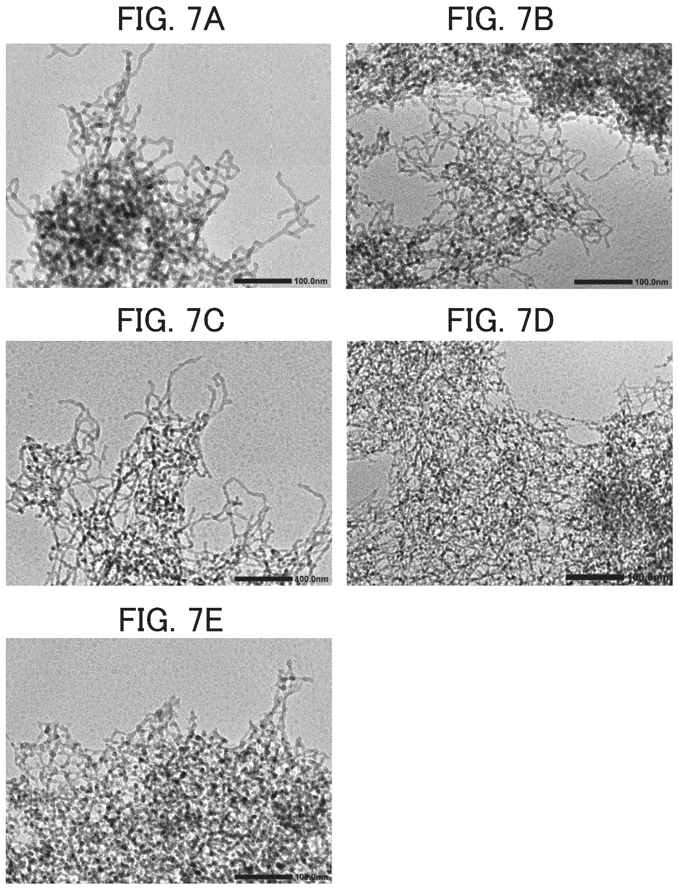

FIGS. 7A to 7E illustrate STEM images of the aerogels according to inventive examples and comparative examples. From the obtained STEM images of the aerogel, 30 regions where the branch parts clearly appeared were randomly extracted so as not to be biased as much as possible, a width of each of the extracted branch parts was measured, and an average of the obtained measurement values was calculated, thereby obtaining an average of thicknesses of the branch parts constituting the skeleton of the aerogel. The results are shown in Table 2.

[5] Evaluation on Thermal Conductivity of Aerogel

The thermal conductivity of the obtained aerogel was measured by using a thermal flowmeter (HFM 436Lambda, manufactured by Netzsch Inc.) under a constant pressure environment at an air temperature of 25°C. The results are shown in Table 2.

[Table 1]

| | Mixing amount of methyltrimethoxysilane (MTMS) [mL] | Mixing amount of 5 mM aqueous solution of acetic acid (HOAc) [mL] | Mixing amount of urea [g] | Surfactant | | | | Addition amount of distilled water (H$_2$O) [mL] | Addition amount of 0.50 M aqueous solution of tetramethyl ammonium hydroxide (TMAOH) [mL] | pH (hydrogen ion concentration) of sol |
| | | | | Type | Maximum molecular weight (M$_w$) | HLB value | Addition amount [g] | | | |
|---|---|---|---|---|---|---|---|---|---|---|
| Inventive Example 1 | 5.0 | 5.0 | - | F127 | 12,600 | 18 to 23 | 1.1 | 4.0 | 3.0 | 13.1 |
| Inventive Example 2 | 5.0 | 5.0 | - | F68 | 8,400 | >24 | 1.5 | 4.0 | 3.0 | 13.1 |
| Inventive Example 3 | 5.0 | 5.0 | - | P105 | 6,500 | 12 to 18 | 2.7 | 4.0 | 3.0 | 13.1 |
| Inventive Example 4 | 5.0 | 5.0 | - | P94 | 5,000 | 13.5 | 3.25 | 4.0 | 3.0 | 13.1 |
| Comparative Example 1 | 5.0 | 12.0 | 3.0 | CTAC | 320 | 15.8 | 0.4 | - | - | 8.5 |

[Table 2]

| | Shape of skeleton | Bulk density of aerogel ($\rho_b$) [g/cm$^3$] | Transmittance of aerogel at a wavelength of 550 nm ($\tau_{550}$) [%] | Bending characteristics of aerogel | | | | | Structure of pore and skeleton of aerogel | | | | | Thermal conductivity of aerogel [mW/m K] |
|---|---|---|---|---|---|---|---|---|---|---|---|---|---|---|
| | | | | Thickness of test piece (D) [mm] | Span length (L) [mm] | L/D ratio | Maximum bending strain calculated based on deflection amount measured by three-point bending test in which support span is 60 mm ($\varepsilon_{max}$, 60) [%] | Minimum tube diameter at which bending is possible (R) [mm] | Average arrangement pitch between adjacent nodes [nm] | Average diameter of inscribed circle drawn to outline of node [nm] | Magnification of average arrangement pitch with respect to average diameter of inscribed circle [time] | Average pore diameter of pore [nm] | Average of thickness of branch part [nm] | |
| Inventive Example 1 | Fibrous | 0.13 | 83 | 9.82 | 60 | 6.11 | 19 | 69.50 | 28.1 | 11.2 | 2.51 | 16.4 | 8.0 | 15.2 |
| Inventive Example 2 | Fibrous | 0.12 | 83 | 9.80 | 60 | 6.12 | 15 | 87.58 | 16.4 | 10 | 1.64 | 11.4 | 5.6 | 15.1 |
| Inventive Example 3 | Fibrous | 0.12 | 90 | 9.78 | 60 | 6.13 | 19 | 69.30 | 25.3 | 9.2 | 2.75 | 16.4 | 6.6 | 14.8 |
| Inventive Example 4 | Fibrous | 0.12 | 96 | 9.69 | 60 | 6.19 | 10 | 132.16 | 15.8 | 8.2 | 1.93 | 9.0 | 4.2 | 14.5 |
| Comparative Example 1 | **Spherical** | 0.13 | 90 | 9.51 | 60 | 6.31 | **9** | **145.16** | 11.6 | 9. 6 | **1.21** | 10.8 | 6.2 | 14.1 |
| (Note) The underlined bold characters shown in the table are out of the appropriate range of the present invention and indicate that the evaluation results are unacceptable. | | | | | | | | | | | | | | |

13

From the results of Table 1 and Table 2, each of the aerogels according to Inventive Examples 1 to 4 is formed of a fibrous skeleton continuous in a mesh form and a plurality of pores defined by the skeleton.

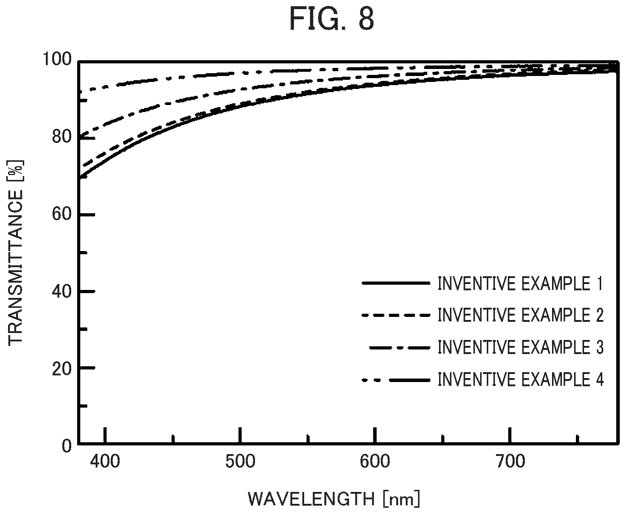

In addition, from the results of Tables 1 and 2, in the aerogels according to Inventive Examples 1 to 4, the transmittance ($\tau_{550}$) at a wavelength of 550 nm is 60% or more at a thickness of 10 mm. In particular, the transmittance ($\tau_{550}$) when a sample having a thickness of 5.0 mm is irradiated with visible light having a wavelength of 550 nm is as shown in FIG. 8.

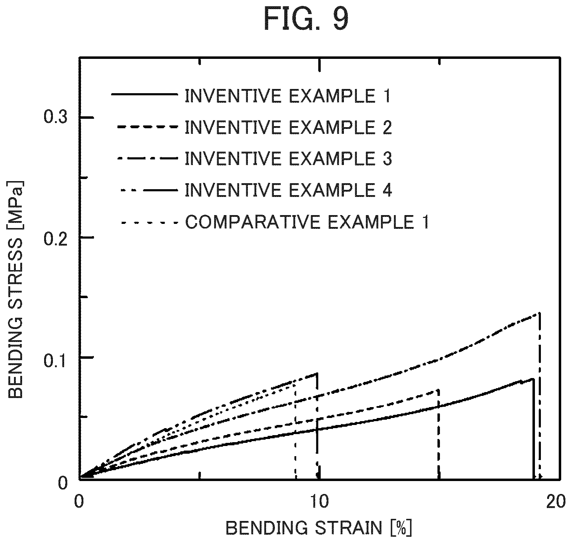

In addition, from the results of Table 1 and Table 2, in the aerogels according to Inventive Examples 1 to 4, the maximum bending strain ($\varepsilon_{max,\,L}$) calculated based on the deflection amount measured by the three-point bending test in which the support span is 60 mm is 10% or more. In particular, a stress-strain curve obtained by the three-point bending test in which the support span is 60 mm is as shown in FIG. 9.

On the other hand, the aerogel according to Comparative Example 1 has a spherical skeleton such as a particle aggregate, and does not have a fibrous skeleton continuous in a mesh form. In addition, in the aerogel according to Comparative Example 1, the maximum bending strain ($\varepsilon_{max,\,60}$) calculated based on the deflection amount measured by the three-point bending test in which the support span is 60 mm is less than 10%.

From these results, it is confirmed that the aerogels according to the inventive examples have a Si-containing microstructure formed by a fibrous skeleton continuous in a mesh form and a plurality of pores defined by the skeleton, and have excellent fracture resistance when deflection occurs and high transparency (particularly high visible light transparency).

In addition, the aerogels according to the inventive examples have an extremely low thermal conductivity, and for example, the aerogel according to Inventive Example 4 has a thermal conductivity at 25°C of 14.5 mW/m K.

In addition, it was found that the aerogels according to the inventive examples have high bending workability. Since the aerogels according to Inventive Examples 1 to 4 have a minimum tube diameter R of 132.16 mm or less at which bending is possible, a tube (outer diameter: 139.8 mm) corresponding to 125A in A denomination or a tube having a tube diameter larger than that can be attached to the surface by bending without breaking. By using the aerogel according to the present invention, it is possible to make the thickness of the thermal insulating material thinner than that in the related art when water or steam passing through the pipe is kept warm or kept cool. In addition, the transparency of the thermal insulating material is enhanced as compared with the related art, so that it is possible to directly observe the pipe without removing the thermal insulating material, and thus it is possible to immediately inspect the pipe when an abnormality such as deterioration occurs.

EXPLANATION OF REFERENCE NUMERALS

1: aerogel
10: microstructure
2: pore
3: skeleton
31: outline part
32: branch part
33: node
C: virtual circle
P: arrangement pitch between adjacent nodes
$R_1$: pore diameter of pore
$R_2$: diameter of inscribed circle drawn in part corresponding to node
t: thickness of branch part

**Claims**

1.  An aerogel formed by a fibrous skeleton continuous in a mesh form and a plurality of pores defined by the skeleton, the aerogel comprising Si,

    the skeleton having substantially polygonal outline parts which respectively form outlines of the plurality of pores, the outline parts each having a plurality of branch parts, which are parts corresponding to sides of the substantially polygonal shape, and a plurality of nodes, which are parts corresponding to vertices of the substantially polygonal shape,
    an average arrangement pitch between adjacent nodes among the nodes constituting the pores being 1.50 times or more an average diameter of inscribed circles drawn at the nodes,
a transmittance ($\tau_{550}$) at a wavelength of 550 nm being 60% or more at a thickness of 10 mm.

2. An aerogel comprising Si,

   a transmittance ($\tau_{550}$) at a wavelength of 550 nm being 60% or more at a thickness of 10 mm,
   an average thickness being 5 mm or more,
   a maximum bending strain ($\varepsilon_{max,\,L}$) calculated based on a deflection amount measured by a three-point bending
   test when a ratio of a support span to the average thickness is 6 or more and 7 or less being 10% or more.

3. The aerogel according to claim 1 or 2, wherein a thermal conductivity at 25°C is 20 mW/m K or less.

4. The aerogel according to claim 1 or 2, wherein a bulk density ($\rho_b$) of the aerogel is 0.3 g/cm$^3$ or less.

5. An aerogel particle formed by fragmenting the aerogel according to claim 1 or 2 into particles.

FIG. 1

FIG. 2A

Urea

$T_{550} = 34\ \%$

FIG. 2B

0.010 M

$T_{550} = 17\ \%$

FIG. 2C

0.10 M

$T_{550} = 46\ \%$

FIG. 2D

0.50 M

$T_{550} = 83\ \%$

FIG. 2E

1.0 M

$T_{550} = 80\ \%$

FIG. 2F

2.0 M

$T_{550} = 61\ \%$

## FIG. 3A

150 nm

## FIG. 3B

150 nm

## FIG. 3C

150 nm

## FIG. 3D

150 nm

# FIG. 4

FIG. 5

FIG. 6A

FIG. 6B

FIG. 6C

FIG. 6D

FIG. 6E

FIG. 7A

FIG. 7B

FIG. 7C

FIG. 7D

FIG. 7E

# FIG. 8

Legend:
- INVENTIVE EXAMPLE 1
- INVENTIVE EXAMPLE 2
- INVENTIVE EXAMPLE 3
- INVENTIVE EXAMPLE 4

Y-axis: TRANSMITTANCE [%]

X-axis: WAVELENGTH [nm]

# FIG. 9

## INTERNATIONAL SEARCH REPORT

| | International application No. |
|---|---|
| | **PCT/JP2024/004650** |

**A. CLASSIFICATION OF SUBJECT MATTER**

*C01B 33/16*(2006.01)i
FI: C01B33/16

According to International Patent Classification (IPC) or to both national classification and IPC

**B. FIELDS SEARCHED**

Minimum documentation searched (classification system followed by classification symbols)

C01B33/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2005/110919 A1 (DYNAX CORP.) 24 November 2005 (2005-11-24) p. 6, lines 25-26, p. 12, lines 4-5, table 1, fig. 1-2 | 1-5 |
| A | WO 2017/131106 A1 (KYOTO UNIVERSITY) 03 August 2017 (2017-08-03) paragraphs [0061], [0063], [0064], production example 2, example 2, fig. 4 | 1-5 |
| A | CN 113149655 A (HARBIN INSTITUTE OF TECHNOLOGY) 23 July 2021 (2021-07-23) examples 4-5, fig. 3d | 1-5 |
| A | JP 2021-095306 A (RIKEN) 24 June 2021 (2021-06-24) example 1 | 1-5 |
| A | WO 2018/163354 A1 (HITACHI CHEMICAL COMPANY, LTD.) 13 September 2018 (2018-09-13) example 2 | 1-5 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **21 March 2024** | **09 April 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/004650**

| Patent document cited in search report | | | Publication date (day/month/year) | Patent family member(s) | | | Publication date (day/month/year) |
|---|---|---|---|---|---|---|---|
| WO | 2005/110919 | A1 | 24 November 2005 | US 2007/0154379 A1 paragraphs [0047], [0086], table 1, example 7, fig. 1-2 EP 1770063 A1 paragraphs [0037], [0069], table 1, exapmle 7, fig. 1-2 CN 1984843 A | | | |
| WO | 2017/131106 | A1 | 03 August 2017 | US 2019/0031849 A1 paragraphs [0063], [0065], [0066], production example 2, example 2, fig. 4 EP 3409695 A1 paragraphs [0058], [0060], [0061], production example 2, example 2, fig. 4 CN 108884175 A | | | |
| CN | 113149655 | A | 23 July 2021 | (Family: none) | | | |
| JP | 2021-095306 | A | 24 June 2021 | (Family: none) | | | |
| WO | 2018/163354 | A1 | 13 September 2018 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019039541 A

**Non-patent literature cited in the description**

- **N. LEVENTIS** ; **C. S.-LEVENTIS** ; **G. ZHANG** ; **A.-M. M. RAWASHDEH**. *Nano Lett*, 2002, vol. 2, 957-960

- **G. ZU** ; **K. KANAMORI** ; **T. SHIMIZU** ; **Y. ZHU** ; **A. MAENO** ; **H. KAJI** ; **K. NAKANISHI** ; **J. SHEN**. *Chem. Mater.*, 2018, vol. 30, 2759-2770